# EUROPEAN PATENT APPLICATION

(11) **EP 4 750 103 A1**
(43) Date of publication of application: **27.05.2026**
(21) Application number: 24215598.4
(22) Date of filing: 26.11.2024
(51) Int. Cl.: H04W 8/18, H04W 12/30

(54) **EUICC DEVICE AND METHOD FOR MANUFACTURING THEREOF**

(71) Applicant: Giesecke+Devrient Mobile Security Germany GmbH, 81677 München (DE)
(72) Inventor: Perarnau, Xavier, 08820 El Prat de Llobregat, Barcelona (ES)
(74) Representative: Giesecke+Devrient IP

(57) **Abstract**

Method for manufacturing an embedded universal integrated circuit card (eUICC) device, comprising:
providing an eUICC device comprising a memory, in which an Operating System (OS) software is stored, wherein said OS software is adapted to exhibit an enabled in-factory-mode and a disabled in-factory-mode and said OS software is incorporated with a particular flag, namely a so-called "in-factory-flag", indicating whether the eUICC device is present in an enabled in-factory-mode or in a disabled in-factory mode.

## Description

The invention pertains to an embedded universal integrated circuit card (eUICC) device and to a method for manufacturing thereof.

The concept of In-Factory Profile Provisioning is an emerging technology being used to streamline the process of embedding cellular Subscriber Identity Module (SIM) profiles into Internet of Things and other connected devices, reducing operational costs and improving performance.

In-Factory Profile Provisioning (IFPP) is a mechanism for the secure loading of mobile network SIM profiles during the manufacturing and/or order fulfilment process based on characteristics such as the device capabilities or the geographic location into which it is expected to be deployed. The use of IFPP removes the need to manually fit plastic SIM cards into each device and offers an alternative to in-field provisioning which may not be appropriate for many forms of device.

The benefits of IFPP can be categorised in terms of improving the in-bound and out-bound logistics associated with SIMs (including removing the need to maintain and manage a large inventory of plastic SIM cards), streamlining the process of applying the SIM profile (by removing the manual step of inserting a card), and reducing the power consumption associated with in-field provisioning.

Embedded universal integrated circuit card (eUICC) devices, for example mobile devices configured to employ electronic subscriber profiles for communicating on mobile networks have emerged and are described, for example, in WO 2023/017031 A1.

There is a need to improve the process for manufacturing of eUICC devices, as it is the expectation of the Mobile Network Operator (MNO) that the eUICC device manufacturer produces eUICC devices in a manner that the obtained eUICC device is available for use in regular operations like network connection and authentication, but cannot be improperly used for operations going beyond the aforementioned regular operations.

The present invention addresses the above object by the subject-matter covered by the independent claims. Preferred embodiments of the invention are defined in the dependent claims.

### SUMMARY OF THE INVENTION

1. (First aspect of the invention) Method for manufacturing an embedded universal integrated circuit card (eUICC) device, comprising:
   providing an eUICC device comprising a memory, in which an Operating System (OS) software is stored, wherein said OS software is adapted to exhibit an enabled in-factory-mode and a disabled in-factory-mode and said OS software is incorporated with a particular flag, namely a so-called "in-factory-flag", indicating whether the eUICC device is present in an enabled in-factory-mode or in a disabled in-factory mode.
2. (Preferred embodiment) Method according to clause 1, comprising the step of enabling the in-factory-mode of the eUICC device and setting said particular flag to a so-called "in-factory" state by sending an appropriate Application Protocol Data Unit (APDU) command from the eUICC device manufacturer to the eUICC device.
3. (Preferred embodiment) Method according to clause 1 or 2, wherein the enabled in-factory-mode is a restricted mode, by which (1) the eUICC is enabled to load in-factory profiles, for example profiles following GSMA standard SGP.41/42, and (2) the eUICC is not able to conduct profile operations such as the "Enable Profile" operation or the "Disable Profile" operation as described in any GSMA standard and the eUICC is not able to use authentication keys such as Authenticate Key Agreement (AKA) or GSM.
4. (Preferred embodiment) Method according to any of clauses 1 to 3, comprising the step of disabling the in-factory-mode of the eUICC device and setting said particular flag to a deleted "in-factory" state by sending an appropriate Application Protocol Data Unit (APDU) command from the eUICC device manufacturer to the eUICC device at a final state of the eUICC device manufacturing process.
5. (Preferred embodiment) Method according to any of clauses 1 to 4, wherein the disabled in-factory-mode is a mode, by which (1) the eUICC is enabled to load in-field profiles, for example profiles following GSMA standard SGP.22/32, and (2) the eUICC is able to conduct profile operations such as the "Enable Profile" operation or the "Disable Profile" operation as described in any GSMA standard and the eUICC is able to use authentication keys such as Authenticate Key Agreement (AKA) or GSM.
6. (Preferred embodiment) Method according to any of clauses 1 to 5, wherein, in the disabled in-factory-mode, the eUICC device is able to load a profile which makes the eUICC device available for use in regular operations such as network connection and authentication.
7. (Preferred embodiment) Method according to any of clauses 1 to 5, wherein the process of disabling the enabled in-factory-mode to a disabled in-factory-mode is irreversible.
8. (Second aspect of the invention) Embedded universal integrated circuit card (eUICC) device, comprising a memory, in which an Operating System (OS) software is stored, wherein said OS software is adapted to exhibit an enabled in-factory-mode and a disabled in-factory-mode and said OS software is incorporated with a particular flag, namely a so-called "in-factory-flag", indicating whether the eUICC device is present in an enabled in-factory-mode or in a disabled in-factory mode.
9. (Preferred embodiment) Embedded universal integrated circuit card (eUICC) device according to clause 8, wherein the enabled in-factory-mode is a restricted mode, by which (1) the eUICC is enabled to load in-factory profiles, for example profiles following GSMA standard SGP.41/42, and (2) the eUICC is not able to conduct profile operations such as the "Enable Profile" operation or the "Disable Profile" operation as described in any GSMA standard and the eUICC is not able to use authentication keys such as Authenticate Key Agreement (AKA) or GSM.
10. (Preferred embodiment) Embedded universal integrated circuit card (eUICC) device according to clause 8 or 9, wherein the disabled in-factory-mode is a mode, by which (1) the eUICC is enabled to load in-field profiles, for example profiles following GSMA standard SGP.22/32, and (2) the eUICC is able to conduct profile operations such as the "Enable Profile" operation or the "Disable Profile" operation as described in any GSMA standard and the eUICC is able to use authentication keys such as Authenticate Key Agreement (AKA) or GSM.
11. (Preferred embodiment) Embedded universal integrated circuit card (eUICC) device according to any of clauses 8 to 10, wherein, in the disabled in-factory-mode, the eUICC device is able to load a profile which makes the eUICC device available for use in regular operations such as network connection and authentication.

### DESCRIPTION OF THE PREFERRED EMBODIMENTS

The present invention provides a method for manufacturing an embedded universal integrated circuit card (eUICC) device, comprising:
providing an eUICC device comprising a memory, in which an Operating System (OS) software is stored, wherein said OS software is adapted to exhibit an enabled in-factory-mode and a disabled in-factory-mode and said OS software is incorporated with a particular flag, namely a so-called "in-factory-flag", indicating whether the eUICC device is present in an enabled in-factory-mode or in a disabled in-factory mode.

The inventive method is particularly advantageous, as it is ensured that the in-factory-mode is disabled in an untrusted environment. In other words, it is guaranteed that the eUICC device manufacturer produces eUICC devices in a manner that the obtained eUICC device is available for use in regular operations like network connection and authentication, but cannot be improperly used for operations going beyond the aforementioned regular operations. The expectation of the Mobile Network Operator (MNO), which resides in an improved process for manufacturing of eUICC devices in order to confer the required security on the MNO, is therefore met.

The term "flag" is well-known to the skilled person. Within CPUs and other logic devices, collections of bit fields called flags are commonly used to control or to indicate the outcome of particular operations. Processors have a status register that is composed of flags. For example, if the result of an addition cannot be represented in the destination an arithmetic overflow is set. The flags can be used to decide subsequent operations, such as conditional jump instructions.

According to a preferred embodiment, the method for manufacturing an eUICC device according to the present invention comprises the step of enabling the in-factory-mode of the eUICC device and setting the flag to a so-called "in-factory" state by sending an appropriate Application Protocol Data Unit (APDU) command from the eUICC device manufacturer to the eUICC device.

According to a further preferred embodiment, the enabled in-factory-mode is a restricted mode, by which (1) the eUICC is enabled to load in-factory profiles, for example profiles following GSMA standard SGP.41/42, and (2) the eUICC is not able to conduct profile operations such as the "Enable Profile" operation or the "Disable Profile" operation as described in any GSMA standard and the eUICC is not able to use authentication keys such as Authenticate Key Agreement (AKA) or GSM.

According to a preferred embodiment, the method for manufacturing an eUICC device according to the present invention comprises the step of disabling the in-factory-mode of the eUICC device and setting the flag to a deleted "in-factory" state by sending an appropriate Application Protocol Data Unit (APDU) command from the eUICC device manufacturer to the eUICC device at a final state of the eUICC device manufacturing process.

According to a further preferred embodiment, the disabled in-factory-mode is a mode, by which (1) the eUICC is enabled to load in-field profiles, for example profiles following GSMA standard SGP.22/32, and (2) the eUICC is able to conduct profile operations such as the "Enable Profile" operation or the "Disable Profile" operation as described in any GSMA standard and the eUICC is able to use authentication keys such as Authenticate Key Agreement (AKA) or GSM.

According to a further preferred embodiment, in the disabled in-factory-mode, the eUICC device is able to load a profile which makes the eUICC device available for use in regular operations such as network connection and authentication.

In the method for manufacturing an eUICC device according to the present invention, the process of disabling the enabled in-factory-mode to a disabled in-factory-mode is irreversible.

Further, the present invention provides an embedded universal integrated circuit card (eUICC) device, comprising a memory, in which an Operating System (OS) software is stored, wherein said OS software is adapted to exhibit an enabled in-factory-mode and a disabled in-factory-mode and said OS software is incorporated with a particular flag, namely a so-called "in-factory-flag", indicating whether the eUICC device is present in an enabled in-factory-mode or in a disabled in-factory mode.

According to a preferred embodiment, the enabled in-factory-mode is a restricted mode, by which (1) the eUICC is enabled to load in-factory profiles, for example profiles following GSMA standard SGP.41/42, and (2) the eUICC is not able to conduct profile operations such as the "Enable Profile" operation or the "Disable Profile" operation as described in any GSMA standard and the eUICC is not able to use authentication keys such as Authenticate Key Agreement (AKA) or GSM.

According to a further preferred embodiment, the disabled in-factory-mode is a mode, by which (1) the eUICC is enabled to load in-field profiles, for example profiles following GSMA standard SGP.22/32, and (2) the eUICC is able to conduct profile operations such as the "Enable Profile" operation or the "Disable Profile" operation as described in any GSMA standard and the eUICC is able to use authentication keys such as Authenticate Key Agreement (AKA) or GSM.

According to a further preferred embodiment, in the disabled in-factory-mode, the eUICC device is able to load a profile which makes the eUICC device available for use in regular operations such as network connection and authentication.

Further aspects, features and advantages of the present invention will become apparent to those of ordinary skills in the art upon reviewing the following detailed description of preferred embodiments and variants of the present invention in conjunction with the accompanying figures.

Reference will now be made to the accompanying figures, in which:
FIG. 1 shows a flow chart of the inventive method for manufacturing an embedded universal integrated circuit card (eUICC) device according to an embodiment; and
FIG. 2 shows an example of an eUICC device manufactured according to the method of the present invention.

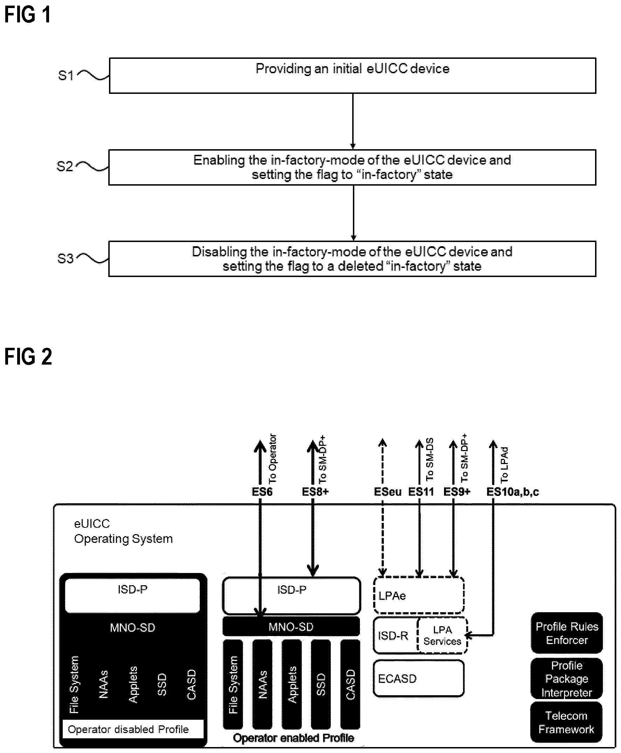

FIG. 1 shows a flow chart of the inventive method for manufacturing an embedded universal integrated circuit card (eUICC) device according to an embodiment. In a first step S1, an eUICC device is provided, wherein the eUICC device comprises a memory, in which an Operating System (OS) software is stored, wherein said OS software is adapted to exhibit an enabled in-factory-mode and a disabled in-factory-mode and said OS software is incorporated with a particular flag, namely a so-called "in-factory-flag", indicating whether the eUICC device is present in an enabled in-factory-mode or in a disabled in-factory mode.

The further step S2 comprises the enabling the in-factory-mode of the eUICC device and setting the flag to a so-called "in-factory" state by sending an appropriate Application Protocol Data Unit (APDU) command from the eUICC device manufacturer to the eUICC device. The enabled in-factory-mode is a restricted mode, by which (1) the eUICC is enabled to load in-factory profiles, for example profiles following GSMA standard SGP.41/42, and (2) the eUICC is not able to conduct profile operations such as the "Enable Profile" operation or the "Disable Profile" operation as described in any GSMA standard and the eUICC is not able to use authentication keys such as Authenticate Key Agreement (AKA) or GSM.

The further step S3 comprises the step of disabling the in-factory-mode of the eUICC device and setting the flag to a deleted "in-factory" state by sending an appropriate Application Protocol Data Unit (APDU) command from the eUICC device manufacturer to the eUICC device at a final state of the eUICC device manufacturing process. The disabled in-factory-mode is a mode, by which (1) the eUICC is enabled to load in-field profiles, for example profiles following GSMA standard SGP.22/32, and (2) the eUICC is able to conduct profile operations such as the "Enable Profile" operation or the "Disable Profile" operation as described in any GSMA standard and the eUICC is able to use authentication keys such as Authenticate Key Agreement (AKA) or GSM.

In the disabled in-factory-mode, the eUICC device is able to load a profile which makes the eUICC device available for use in regular operations such as network connection and authentication. The process of disabling the enabled in-factory-mode to a disabled in-factory-mode is irreversible.

FIG. 2 shows an example of an eUICC device manufactured according to the method of the present invention. The figure shows the schematic representation of an eUICC in line with the standard SGP.22. The figure is taken from page 32 of SGP.22 v3.1 and illustrates that the eUICC is present in a disabled in-factory-mode as a mode, by which (1) the eUICC is enabled to load in-field profiles, for example profiles following GSMA standard SGP.22/32, and (2) the eUICC is able to conduct profile operations such as the "Enable Profile" operation or the "Disable Profile" operation as described in any GSMA standard and the eUICC is able to use authentication keys such as Authenticate Key Agreement (AKA) or GSM. In the disabled in-factory-mode, the eUICC device is able to load a profile which makes the eUICC device available for use in regular operations such as network connection and authentication.

## Claims

1. Method for manufacturing an embedded universal integrated circuit card (eUICC) device, comprising:
providing an eUICC device comprising a memory, in which an Operating System (OS) software is stored, wherein said OS software is adapted to exhibit an enabled in-factory-mode and a disabled in-factory-mode and said OS software is incorporated with a particular flag, namely a so-called "in-factory-flag", indicating whether the eUICC device is present in an enabled in-factory-mode or in a disabled in-factory mode.

2. Method according to claim 1, comprising the step of enabling the in-factory-mode of the eUICC device and setting said particular flag to a so-called "in-factory" state by sending an appropriate Application Protocol Data Unit (APDU) command from the eUICC device manufacturer to the eUICC device.

3. Method according to claim 1 or 2, wherein the enabled in-factory-mode is a restricted mode, by which (1) the eUICC is enabled to load in-factory profiles, for example profiles following GSMA standard SGP.41/42, and (2) the eUICC is not able to conduct profile operations such as the "Enable Profile" operation or the "Disable Profile" operation as described in any GSMA standard and the eUICC is not able to use authentication keys such as Authenticate Key Agreement (AKA) or GSM.

4. Method according to any of claims 1 to 3, comprising the step of disabling the in-factory-mode of the eUICC device and setting said particular flag to a deleted "in-factory" state by sending an appropriate Application Protocol Data Unit (APDU) command from the eUICC device manufacturer to the eUICC device at a final state of the eUICC device manufacturing process.

5. Method according to any of claims 1 to 4, wherein the disabled in-factory-mode is a mode, by which (1) the eUICC is enabled to load in-field profiles, for example profiles following GSMA standard SGP.22/32, and (2) the eUICC is able to conduct profile operations such as the "Enable Profile" operation or the "Disable Profile" operation as described in any GSMA standard and the eUICC is able to use authentication keys such as Authenticate Key Agreement (AKA) or GSM.

6. Method according to any of claims 1 to 5, wherein, in the disabled in-factory-mode, the eUICC device is able to load a profile which makes the eUICC device available for use in regular operations such as network connection and authentication.

7. Method according to any of claims 1 to 5, wherein the process of disabling the enabled in-factory-mode to a disabled in-factory-mode is irreversible.

8. Embedded universal integrated circuit card (eUICC) device, comprising a memory, in which an Operating System (OS) software is stored, wherein said OS software is adapted to exhibit an enabled in-factory-mode and a disabled in-factory-mode and said OS software is incorporated with a particular flag, namely a so-called "in-factory-flag", indicating whether the eUICC device is present in an enabled in-factory-mode or in a disabled in-factory mode.

9. Embedded universal integrated circuit card (eUICC) device according to claim 8, wherein the enabled in-factory-mode is a restricted mode, by which (1) the eUICC is enabled to load in-factory profiles, for example profiles following GSMA standard SGP.41/42, and (2) the eUICC is not able to conduct profile operations such as the "Enable Profile" operation or the "Disable Profile" operation as described in any GSMA standard and the eUICC is not able to use authentication keys such as Authenticate Key Agreement (AKA) or GSM.

10. Embedded universal integrated circuit card (eUICC) device according to claim 8 or 9, wherein the disabled in-factory-mode is a mode, by which (1) the eUICC is enabled to load in-field profiles, for example profiles following GSMA standard SGP.22/32, and (2) the eUICC is able to conduct profile operations such as the "Enable Profile" operation or the "Disable Profile" operation as described in any GSMA standard and the eUICC is able to use authentication keys such as Authenticate Key Agreement (AKA) or GSM.

11. Embedded universal integrated circuit card (eUICC) device according to any of claims 8 to 10, wherein, in the disabled in-factory-mode, the eUICC device is able to load a profile which makes the eUICC device available for use in regular operations such as network connection and authentication.
